# EUROPEAN PATENT APPLICATION

(11) **EP 4 629 687 A1**
(43) Date of publication of application: **08.10.2025**
(21) Application number: 25167897.5
(22) Date of filing: 02.04.2025
(51) Int. Cl.: H04W 24/04, H04B 7/06, H04B 7/08, H04L 5/00

(54) **METHOD APPARATUS AND COMPUTER PROGRAM FOR PREDICTING A REFERENCE SIGNAL RESOURCE**

(30) Priority: 05.04.2024 GB 202404859
(71) Applicant: Nokia Technologies Oy, 02610 Espoo (FI)
(72) Inventor: BONFANTE, Andrea, Paris (FR); KOSKELA, Timo, Oulu (FI); ALI, Amaanat, Espoo (FI); LADDU, Keeth Saliya Jayasinghe, Espoo (FI)
(74) Representative: Page White Farrer

(57) **Abstract**

A user equipment comprising: an inference module configured to predict at least one reference signal resource using a first set of input reference signal resources as an input of the inference module; a performance monitoring module configured for performance monitoring of the inference module, wherein the performance monitoring uses a second set of reference signals as input to the performance monitoring module; a performance monitoring failure detection module configured to detect failure of the performance monitoring module.

## Description

### TECHNICAL FIELD

This disclosure relates to methods, an apparatus and computer programs, and in particular - but not exclusively - to methods, apparatus and computer programs relating to monitoring beam prediction.

### BACKGROUND

A communication network can be seen as a facility that enables communications between two or more communication devices, or provides communication devices access to a data network. A mobile or wireless communication network is one example of a communication network. A communication device may be provided with a service by an application server.

Such communication networks operate in according with standards such as those provided by 3GPP (Third Generation Partnership Project) or ETSI (European Telecommunications Standards Institute). Examples of standards are the so-called 4G (4^{th} Generation), 5G (5th Generation) standards provided by 3GPP.

### SUMMARY

Some example embodiments of this disclosure will be described with respect to certain aspects. These aspects are not intended to indicate key or essential features of the embodiments of this disclosure, nor are they intended to be used to limit the scope of thereof. Other features, aspects, and elements will be readily apparent to a person skilled in the art in view of this disclosure.

According to a first aspect there is provided a user equipment comprising: an inference module configured to predict at least one reference signal resource using a first set of input reference signal resources as an input of the inference module; a performance monitoring module configured for performance monitoring of the inference module, wherein the performance monitoring uses a second set of reference signals as input to the performance monitoring module; a performance monitoring failure detection module configured to detect failure of the performance monitoring module.

According to some examples, the performance monitoring failure detection module is configured to send, in response to detecting the failure, an indication to stop or suspend the inference module from providing predictions of the at least one reference signal resource.

According to some examples, the performance monitoring failure detection module is configured to send, in response to detecting the failure, an indication to the performance monitoring module to stop the performance monitoring.

According to some examples, the performance monitoring module is configured to cause the user equipment to send an indication of the failure to a network entity in a network with which the user equipment is in communication, wherein the indication is preconfigured in the network.

According to some examples, the indication is sent to the network entity in a report of the beam prediction or of the performance monitoring.

According to some examples, the report comprises a report configured by at least one Radio Resource Control message from a network comprising the network entity.

According to some examples, the indication comprises a value in the report that is preconfigured in the network to indicate the failure of the performance monitoring.

According to some examples, the indication of the failure is associated with at least one reference signal resource of the second set of reference signal resources.

According to some examples, the performance monitoring module is configured to cause the user equipment to trigger an event indicating the failure to the network.

According to some examples, the event is triggered by a medium access control, control element.

According to some examples, the event is triggered by a random access request or a scheduling request in uplink control information.

According to some examples, the inference module is configured to predict the at least one reference signal resource using a machine learning model, wherein information associated to the first set of reference signal resources are used as input of the machine learning model to predict the at least one reference signal.

According to some examples, the performance monitoring module is configured to send an error message to the performance monitoring failure detection module upon detecting at least one of the following conditions: failing to measure at least one reference signal of the second set of reference signal resources; failing to detect at least one reference signal of the second set of reference signal resources; failing to determine performance monitoring metrics and/or events related to at least one reference signal of the second set of reference signal resources; measuring at least one reference signal of the second set of reference signal resources at a power level below a threshold.

According to some examples, the performance monitoring failure detection module is configured to determine failure of the performance monitoring module after receiving a number of error messages larger than a threshold from the performance monitoring module.

According to some examples, the monitoring failure detection module is configured to cause, in response to detecting the failure of the performance monitoring by detecting a failure to detect at least one reference signal of the second set of reference signal resources, performing at least one of: suspending or stopping the beam prediction; transmitting null in a beam prediction report or a performance monitoring report for the at least one reference signal resource where the failure is detected, wherein the null provides the indication; transmitting a dummy value for the at least one reference signal resource in the beam prediction report or the performance monitoring report, wherein the dummy value provides the indication; or reporting measurement reference signal resources without reporting beam prediction results.

According to a second aspect, there is provided an apparatus comprising: at least one processor; and at least one memory storing instructions that, when executed by the at least one processor, cause the apparatus at least to: predict, using an inference module, at least one reference signal resource using a first set of input reference signal resources; monitor, using a performance monitoring module, performance of the inference module using a second set of reference signal resource; detect, using a performance monitoring failure detection module, failure of the performance monitoring module.

According to a third aspect, there is provided a method performed by a user equipment, the method comprising: predicting, using an inference module, at least one reference signal resource using a first set of input reference signal resources; monitoring, using a performance monitoring module, performance of the inference module, wherein the performance monitoring uses a second set of reference signal resources; detecting, using a performance monitoring failure detection module, failure of the performance monitoring module.

According to some examples, the method comprises sending, in response to detecting the failure, an indication to stop or suspend the inference module from providing predictions of the at least one reference signal resource.

According to some examples, the method comprises sending, in response to detecting the failure, an indication to the performance monitoring module to stop the performance monitoring.

According to some examples, the method comprises sending an indication of the failure to a network entity in a network with which the user equipment is in communication, wherein the indication is preconfigured in the network.

According to some examples, the method comprises sending the indication to the network entity in a report of the beam prediction or of the performance monitoring.

According to some examples, the report comprises a report configured by at least one Radio Resource Control message from a network comprising the network entity.

According to some examples, the indication comprises a value in the report that is preconfigured in the network to indicate the failure of the performance monitoring.

According to some examples, the indication of the failure is associated with at least one reference signal resource of the second set of reference signal resources.

According to some examples, the method comprises causing the user equipment to trigger an event indicating the failure to the network.

According to some examples, the event is triggered by a medium access control, control element.

According to some examples, the event is triggered by a random access request or a scheduling request in uplink control information.

According to some examples, the method comprises predicting the at least one reference signal resource using a machine learning model, wherein information associated to the first set of reference signal resources are used as input of the machine learning model to predict the at least one reference signal.

According to some examples, the method comprises sending an error message to the performance monitoring failure detection module upon detecting at least one of the following conditions: failing to measure at least one reference signal of the second set of reference signal resources; failing to detect at least one reference signal of the second set of reference signal resources; failing to determine performance monitoring metrics and/or events related to at least one reference signal of the second set of reference signal resources; measuring at least one reference signal of the second set of reference signal resources at a power level below a threshold.

According to some examples, the method comprises determining failure of the performance monitoring module after receiving a number of error messages larger than a threshold from the performance monitoring module.

According to some examples, the method comprises causing, in response to detecting the failure of the performance monitoring by detecting a failure to detect at least one reference signal of the second set of reference signal resources, performing at least one of: suspending or stopping the beam prediction; transmitting null in a beam prediction report or a performance monitoring report for the at least one reference signal resource where the failure is detected, wherein the null provides the indication; transmitting a dummy value for the at least one reference signal resource in the beam prediction report or the performance monitoring report, wherein the dummy value provides the indication; or reporting measurement reference signal resources without reporting beam prediction results.

According to a fifth aspect, there is provided a computer program comprising instructions for causing a user equipment to perform: predicting, using an inference module, at least one reference signal resource using a first set of input reference signal resources; monitoring, using a performance monitoring module, performance of the inference module, wherein the performance monitoring uses a second set of reference signal resource; detecting, using a performance monitoring failure detection module, failure of the performance monitoring module.

According to a fourth aspect there is provided a computer readable medium comprising instructions which, when executed by a user equipment, cause the user equipment to perform at least the following: predicting, using an inference module, at least one reference signal resource using a first set of input reference signal resources; monitoring, using a performance monitoring module, performance of the inference module, wherein the performance monitoring uses a second set of reference signal resource; detecting, using a performance monitoring failure detection module, failure of the performance monitoring module.

According to a fifth aspect, there is provided a non-transitory computer readable medium comprising program instructions that, when executed by a user equipment, cause the user equipment to perform at least the following: predicting, using an inference module, at least one reference signal resource using a first set of input reference signal resources; monitoring, using a performance monitoring module, performance of the inference module, wherein the performance monitoring uses a second set of reference signal resource; detecting, using a performance monitoring failure detection module, failure of the performance monitoring module.

According to an aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

In the above, many different embodiments have been described. It should be appreciated that further embodiments may be provided by the combination of any two or more of the embodiments described above.

### DESCRIPTION OF FIGURES

Some example embodiments will now be described, by way of non-limiting and illustrative example only, with reference to the accompanying Figures in which:
FIG. 1 shows an example inference procedure for beam prediction;
FIG. 2 shows example UE-assisted performance monitoring;
FIG. 3 shows an example signalling diagram for performance monitoring of beam prediction;
FIG. 4 shows an example Block diagram for implementing a monitoring process failure method at UE device;
FIG. 5 shows an example method;
FIG. 6 shows an example method;
FIG. 7 shows an example method;
FIG. 8 shows an example method;
FIG. 9 shows an example method;
FIG. 10 shows a representation of an apparatus according to some example embodiments;
FIG. 11 shows a representation of an apparatus according to some example embodiments; and
FIG. 12 shows a schematic representation of a non-volatile memory medium storing instructions which when executed by a processor allow a processor to perform one or more of the steps of the methods disclosed herein.

### DETAILED DESCRIPTION

In a communications network, models (e.g., Artificial Intelligence (AI) or Machine Learning (ML) models) can be used to predict one or more best beam(s) based on a limited set of measurements (e.g., based on a limited set of beams). A beam may be considered to be transmitted with a reference signal or reference signal resource sent from a network towards a User Equipment (UE). Best beams can be considered to comprise the strongest beams at the UE (e.g., the beams with the highest Layer 1 Reference Signal Received Power (L1-RSRP) at the UE). Best beams are often beams most optimally directed towards the UE.

AI/ML models are used for beam prediction in 3GPP Release 18 and Release 19 (Rel-18 and Rel-19).

A sub-use case is spatial-domain prediction ("BM-Case1"), where beam prediction is based on a limited set of measurements that does not contain any historical information. A different sub-use case is time-domain prediction ("BM-Case2"), where beam prediction into the future is based on a limited set of measurements that contains historical information.

Measurements and predictions may be based on two beam sets (e.g., on two sets of reference resource signals). The terms "beam" and "reference signal resources" are used interchangeably throughout. The first beam set may be considered to be "Set B" or a "first set". Set B may comprise the set of beams whose measurements are used to make beam predictions. For example, set B may comprise a set of beams whose measurements are inputted to the AI/ML model (e.g., L1-RSRP, etc.). Another beam set "Set A" may comprise a complete set of beams over which the prediction will operate. For example, set A may comprise a set of beams whose predictions are outputted from the AI/ML model (e.g., beam IDs, etc.)..

Set B can be:
- different from Set A (for space-domain and time-domain prediction);
- a subset of Set A (for space-domain and time-domain prediction);
- the same as Set A (for time-domain prediction).

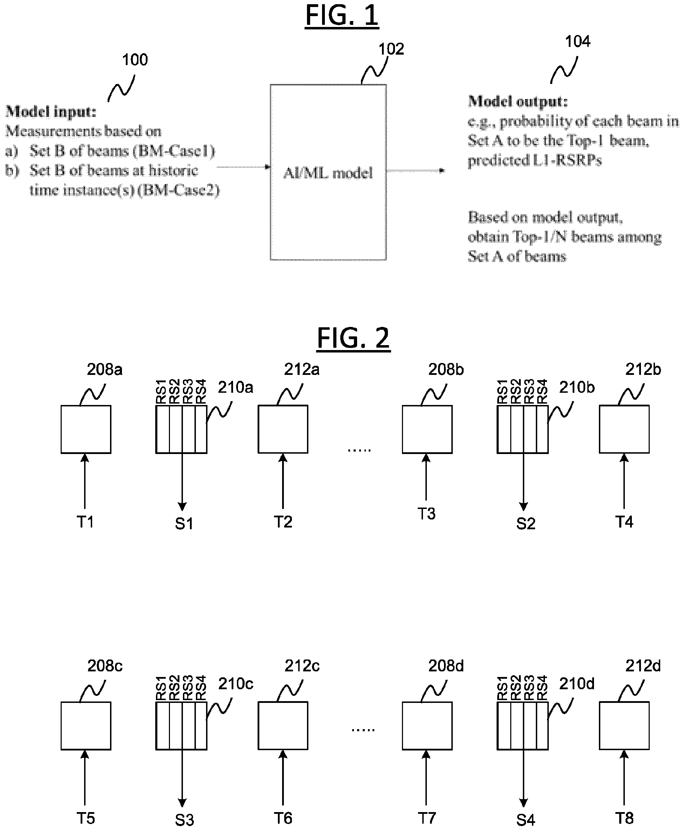

FIG. 1 shows an example process for beam management predictions the process for beam management predictions for the BM-Case1 (space-domain) and BM-Case2 (time domain). The process utilizes measurements from Set B beams as input 100 of the AI/ML model 102. Additionally, the beam identification (ID) information may also be included as input 100 for the AI/ML model 102. The AI/ML model's output 104 includes probabilities for each beam in Set A being the Top-1 beam (the "best" beam) or the predicted L1-RSRP or other relevant parameters, depending on the labelling.

For BM-Case1, Set B measurements are used to predict the Top-1/N beams from Set A. Conversely, for BM-Case2, historical measurements from previous time instances are employed for temporal beam prediction for beams in Set A. The process considers various scenarios, including cases where Set A and Set B are different, Set B is subset of Set A, and where Set A and Set B are identical for BM-Case 2.

Furthermore, Release-18 considered both Downlink (DL) beam prediction and DL beam pair prediction (Tx-Rx). In both BM-Case1 and BM-Case2, a UE can use a UE-sided AI/ML model and report the prediction results to the network (NW), or the NW can predict the Top-1/N beams or the L1-RSRP value based on the reported Set B measurements using a NW-sided model.

In the context of beam management, specifically BM-Case1 and BM-Case2, various aspects related to enhanced signaling and beam reporting were studied in Release-18 and specification work is currently ongoing in Release-19. There are considerations that aim to optimize beam management strategies, particularly in scenarios where UE-sided Al/ML models are employed. Signaling improvements for measurement configuration and reporting may introduce new signaling mechanisms to facilitate these processes efficiently. For UE-sided Al/ML models 102 in BM-Case1 and BM-Case2, the NWmay indicate the Set A-Set B association to the UE, such as mapping beams within Set B to Set A if relevant. Furthermore, the NW may provide beam indications to the UE for reception, including beams in Set A that are not present in Set B. Legacy mechanisms, like the Transmission Configuration Indicator (TCI) state mechanism, may be reused for this purpose.

For BM-Case1 and BM-Case2 with a NW-sided AI/ML model, enhancements in L1 beam reporting may be used, such as allowing the UE to report the measurement results of more than four beams in a single reporting instance. Other L1 reporting enhancements may also be considered.

Tx Beam identifiers and predicted L1-RSRPs corresponding to DL Tx beams may be outputs from beam prediction. Further, confidence or probability information related to the Al/ML model 100's output inference may also be included. This can be achieved using performance monitoring.

Performance monitoring of beam prediction functionality can use different types of monitoring, such as Type 1 (NW-sided) and Type 2 (UE-sided) performance monitoring. Various monitoring mechanisms can be used, including UE-initiated monitoring, Network (NW)-triggered monitoring, and UE-assisted monitoring which combines both UE and NW operations. These options aim to provide flexibility and efficiency in monitoring UE-sided Al/ML model performance:
In NW-sided performance monitoring for UE-sided beam prediction, the NW configures a set of Reference Signal (RS) resources (beams) for monitoring. The UE measures these RS resources and sends the measurements back to the NW. Using these measurements and inference-related reports, the NW computes performance metrics such as beam prediction accuracy or RSRP differences. These metrics help assess the effectiveness of beam prediction functionality associated with the CSI report.

In UE-assisted monitoring, the NW configures the UE for Al/ML monitoring using specific RS resources. The UE measures these RS resources to calculate performance metrics like beam prediction accuracy or RSRP differences. These metrics are then reported back to the NW to evaluate the functionality's performance.

For UE-sided monitoring, the UE can request the NW to initiate a monitoring session. Following this, the NW configures the UE for performance monitoring with dedicated set of RS resources for monitoring. The UE measures these set of RS resources for monitoring and calculate performance metrics, determining the functionality's operability. The UE may be responsible for decisions such as model selection, activation, deactivation, switching, and fallback operations in this type of monitoring. These decisions may be communicated to the NW so that the functionality can be reconfigured.
- Performance monitoring of beam prediction functionality considers reporting mechanisms for performance monitoring, such as reporting prediction results, performance metrics, and event-triggered reporting. Different methods for reporting these metrics and events to facilitate effective monitoring can be applied. Further, signaling mechanisms for transmitting the set of RS resources for performance monitoring can be used. These mechanisms include specifying the type of RS resources (e.g. Synchronization Signal Block (SSB) or Channel State Information RS (CSI-RS)), determining subsets of beams for monitoring, and identifying the frequency and contents of performance monitoring reports. Performance monitoring may also use metrics for reporting performance, beam measurements, and events for monitoring purposes. NW can support different performance monitoring reporting metrics as follows:
   - For beam prediction accuracy performance monitoring metric, the UE can use the output of the AI/ML model, e.g., predicted Top-K beam IDs obtained directly or indirectly based on the predicted RSRPs (obtained at the output of the AI/ML model), and compare it with the ground truth value of the best Top-1 beam over the Set A beams obtained from the measurements. For **determining** the Beam prediction accuracy related KPIs, the UE can refer to the Key Performance Indicators (KPIs) described in clause 6.3.1 of 3GPP TR 38.843, prioritizing the KPIs mostly used in Release-18 SI evaluation including:
      ∘ Top-1 (%): the percentage of "the Top-1 genie-aided beam is Top-1 predicted beam".
      ∘ Top-K/1 (%): the percentage of "the Top-1 genie-aided beam is one of the Top-K predicted beams", where K >1 and values can be reported.
   - For the L1-RSRP difference for Top-1 predicted beam, the UE may use the output 104 of the AI/ML model 102, e.g., predicted Top-K beam IDs obtained directly or indirectly based on the predicted RSRPs (obtained at the output of the AI/ML model) as well as the L1-RSRPs measured (ideal L1-RSRP) over the Set A beams. To determine the L1-RSRP difference, the UE can refer to the KPI definition contained in clause 6.3.1 of 3GPP TR 38.843:
      ∘ The "L1-RSRP difference of Top-1 predicted beam" is the difference between the ideal L1-RSRP of Top-1 predicted beam and the ideal L1-RSRP of the Top-1 genie-aided beam.
   - In the "L1-RSRP difference predicted", the UE calculates the L1-RSRP difference between measured RSRP and predicted RSRP. The UE can use the predicted RSRP obtained at the output of the AI/ML model as well as the L1-RSRPs measured over the Set A beams (ideal L1-RSRP). To determine the L1-RSRP difference, the UE can refer to the KPI definition contained in clause 6.3.1 of TR 38.843:
      - The predicted L1-RSRP difference is defined as the difference between the predicted L1-RSRP of Top-1 predicted beam and the ideal L1-RSRP of the same beam.

It should be noted that the above are only examples of performance monitoring features, and other features/methods may be used. In some cases, there could be complexities in monitoring UE-sided AI/ML models effectively and efficiently. An example of a situation where the performance monitoring process may fail based on the proposals provided could involve a scenario where a NW configures a UE-sided AI/ML model for beam prediction. The NW and/or UE may be tasked with monitoring the performance of this model to maintain a high-quality prediction for UE-sided model. Three potential example sources of failure in the monitoring process are discussed below.

Firstly, the dependency on UE measurements for performance monitoring may cause failure of the performance monitoring. Performance monitoring may involves UE-sided measurements of certain set of RS resources used for monitoring. One option is for the UE to calculate performance metrics and report metrics or events to the NW, or for the UE to report the measurements directly so that the NW can calculate the metrics. In some scenarios, a UE may not be able to perform measurements on the set of RS resources configured for monitoring, or in other cases the UE-NW configurations may not be properly aligned (e.g., the UE may fail to determine the optimal or quasi-optimal Rx beam for a corresponding Tx beam). In these cases, the UE may fail to provide reliable monitoring measurements.

Secondly, a mutual understanding between a UE and NW may not be the same. For example, as shown in FIG. 2, a UE may be configured to monitor beams T1 208a and T2 212a for predicted beams S1 210a, beams T3 208b and T4 212b for predicted beams S2 210b, beams T5 208c and T6 212c for predicted beams S3 210c and beams T7 208d and T8 212d for predicted beams S4 2104 Therefore, the UE can compare the predicted RSRP with the measured RSRP of the same beam and calculate the RSRP difference as a monitoring metric. However, if the mutual understanding between the UE and NW of the beam indices is not the same, e.g. predicted beam indices are changing compared to the measured beam indices, the NW may configure a set of RS resources used for monitoring that does not match the set of resources expected by the UE, which may lead to ambiguity in determining the monitoring results.

Thirdly, a performance monitoring process may fail could be the scenario where the channel conditions are not stable for the beams corresponding to the RS resources required for monitoring. For example, one or more spatial directions associated with the "monitored" Tx beams may be obstructed by dynamic blockers (e.g., obstacles), or the "monitored" Tx beams may become blocked due to UE mobility. In this case, the UE may provide unreliable measurements for the RS resources being monitored.

Some examples described herein are relevant for a UE-sided model. Some examples are applicable to a case where a NW and/or UE are unable to complete a performance monitoring task for beam prediction such that the NW and/or UE are unable to assess the quality of the predictions. In some examples, to address the monitoring process failures and potential impacts, a method that allows the UE to perform prediction as long as the UE and/or NW are capable to perform monitoring of the UE-sided model is provided.

A situation where a UE is configured for model (e.g., AI/ML model) inference with a first set of RS resources (set B) to measure for use as input to the Al/ML model and transmits to NW in a prediction report the predicted beam information from a second set of RS resources predicted by the Al/ML model output. In some examples, the predicted beam information may comprise at least one predicted beam index and/or corresponding RSRP value.

The UE may be configured to Al/ML model monitoring with a second set of monitoring RS resources which are derived from the prediction report and/or based on the full Set A beams or based on part of Set A beams. Beam information may comprise at least one measured beam index and/or corresponding measured RSRP.

The performance monitoring process may comprise a UE measuring the set of monitoring RS resources, when the UE is configured with NW-sided monitoring, i.e. the UE transmits to NW, in a monitoring report, the beam information for set of monitoring RS resources. Alternatively, the monitoring process may comprise determining monitoring metrics and/or events based on UE measured set of monitoring RS resources, and reporting metrics and/or events in a monitoring report whenever the UE is configured with UE-assisted monitoring, UE-sided monitoring types of monitoring. The UE may also be configured with more than one performance monitoring process, where each process may be associated with monitoring the performance of a ML Model or a ML Functionality.

The determination of performance monitoring process failure (it should be noted that that is the failure of process of monitoring, not functionality/models failure) may comprise at least one of:
- Failure to measure at least one RS resource in the set of monitoring RS resources.

▪ Failure to detect at least one RS resource in the set of monitoring RS resources (e.g., the SSB/CSI-RS may be transmitted within a temporal window and the UE may miss to detect those RS resources due to inaccurate synchronization with the NW transmission of SSB/CSI-RS).
▪ Failure to determine performance monitoring metrics and/or events related to at least one RS resource in the set of monitoring RS resources.
▪ Measurement of the at least one RS resource in the set of monitoring RS resources below a threshold level, i.e. the signal strength is not high enough (in some examples, the NW may configure a quality threshold such as a minimum RSRP threshold).

Based on the determination performance monitoring process failure, there could be impacts on the AI/ML model inference and reporting to the NW of predicted beam information, including at least one of:
- the UE reporting in a prediction report a value/information (e.g. null or dummy predicted beam information) associated with at least one RS resource in the set of monitoring RS resources that the UE has failed to measure;
- the prediction report may comprise an indication that at least one failure of the performance monitoring procedure has been detected;
- the UE may report in a monitoring report a value/information (e.g. null or dummy beam information) associated with the RS resource that the UE has failed to measure;

▪ the UE may report null performance monitoring metrics or performance monitoring metrics with dummy values corresponding to the RS resource failed to measure;
▪ the UE may fallback to report measured beams but not report predicted beams (i.e., fall back to legacy beam measurement reporting rather than beam prediction reporting).
▪ the UE may stop, not perform, suspend or determine to interrupt the prediction-based reporting - the UE may indicate this to the NW;
▪ when more than one performance monitoring process is configured to the UE, the UE may also indicate the applicable identifier of the performance monitoring process that has been detected to fail. In some examples, this identifier can be the corresponding model-ID or the functionality ID associated with the performance monitoring process.

In some examples, additionally or alternatively to the above, the UE may transmit to the NW an event associated with the failure of the performance monitoring process. The event may comprise an indication/signaling from UE to NW. In some examples, the indication may be a control message such as MAC-CE. Other mechanisms for indications may use RA or SR in UCI framework. The message may be associated with a specific identifier identifying the type of event related to the performance monitoring procedure failure. In some examples, the failure cause may be indicated by the message. i.e. the failure cause may be the failure of performing monitoring procedure for the prediction-based beam management.

In some event-based examples, the event may include the information of the at least one failing RS resource in the set of monitoring RS resources. In some examples, the event may be transmitted after the failure of the performance monitoring process occurs multiple times. A threshold may be configured to determine the maximum number of failures of the performance monitoring process before transmitting the event.

Based on the at least one information associated to the failure of the performance monitoring process (either event, or failing RS resource in the set of monitoring RS resources, or null/dummy values contained in the report corresponding to monitoring RS resources, or any other examples), the NW may invalidate predicted beam information received from UE. In some examples, the NW may invalidate predicted beam information reported between the time of receiving the latest valid report associated to performance monitoring and the time of receiving the event associated to the failure of performance monitoring process.

In some examples, the NW may configure the UE with a different set of monitoring RS resources based on the at least one information associated to the failure of the performance monitoring process. In other examples, the different set of monitoring RS resources may be configured to the UE to be used upon determining that the performance monitoring has failed, and the UE can then activate this configuration and start performance monitoring on this set of resources and indicate in Uplink (UL) messaging or signalling to the NW.

In some examples, NW may disable the configuration for performing UE-sided Al/ML model inference.

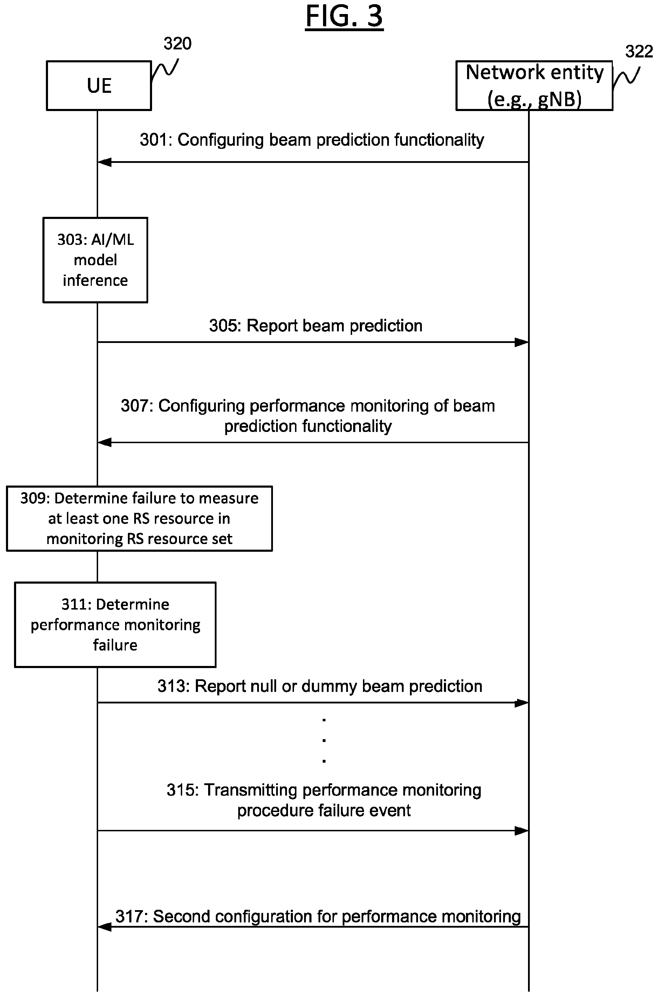

FIG. 3 shows an example message flow between a UE 320 and network entity 322 (e.g., a RAN node, gNB, NW node etc.). In some examples, the method of FIG. 3 may be used to report failure of performance monitoring of beam prediction from UE 320 to network entity 322.

At 301, NW entity 322 configures UE 320 with beam prediction functionality. UE 320 may be configured with a first set of reference signals (set B) to use to provide beam prediction results.

According to some examples, at 301 NW entity 322 configures UE 320 with a first CSI Report - CSI Resource Config 1. The UE can use the configuration to determine resources to measure for the Al/ML model input (it should be noted that although an Al or ML model is discussed in this example, any suitable inference model may be used).

At 303, UE 302 measures RS signals based on the resource set (e.g., CSI resource set) indicated in the report configuration (e.g., CSI resource configuration) and use the measurements as input of the model. UE 320 may run the model for inference at 303.

At 305, the output predicted beams from a model inference at 303 is sent to network entity 322.

At 307, network entity 322 configures UE with a configuration for monitoring functionality performance. UE 320 may be configured with a second set of reference signal resources to use for performance monitoring of the beam prediction.

According to some examples, the configuration at 307 is indicated in CSI report settings #2 for monitoring functionality performance. UE 320 may be configured with the CSI-RS resources corresponding for monitoring RS resource set. In some examples, UE 320 can be configured with RS resources corresponding to the CSI resource Indicator (CRI)/ SSB Resource Indicator (SSBRI) received in the predicted report at 305. Alternatively, UE 320 may be configured with the RS resources corresponding to full Set A or part of Set A.

At 309. UE 320 fails to measure at least one RS resource in the second set configured at 307. This may comprise at least one of the following:
- failing to measure at least one reference signal resource of the second set of reference signal resources;
- failing to detect at least one reference signal resource of the second set of reference signal resources;
- failing to determine performance monitoring metrics and/or events related to at least one reference signal resource of the second set of reference signal resources;
- measuring at least one reference signal resource of the second set of reference signal resources at a power level below a pre-configured threshold.

At 311, UE 320 may determine performance monitoring failure. This may be based on determining one or more failures at 309 (in some examples, a threshold number of failures may be detected before performance monitoring failure is determined). UE 320 may stop or suspend the beam prediction upon detecting performance monitoring failure. In some examples, UE 320 may prevent to legacy beam measurement report by reporting measurement RS signal resources without beam prediction results.

Different options for reporting an indication of the performance monitoring failure are shown at 313 and 315.

In one option, at 313, the indication may be sent by UE 320 in a report to the network entity 322. The report may comprise a beam prediction report that may include at least some predicted beam information. In other examples, the report may comprise a performance monitoring report. The report may comprise a null or dummy value corresponding to Rs resources that UE 320 has failed to measure. In some examples, the reporting may be configured by NW entity 322. In some examples. UE 320 may only be able to send the indication of failure at a reporting instance configured by NW entity 322.

In a second option, at 315, UE 320 may trigger an event in NW entity 322 associated with monitoring performance failure. The event may be triggered by at least one of: medium access control control element, MAC CE; a random access request; and a scheduling request in uplink control information. In some example there could be a list of events or trigger states that are configured by NW entity 322, and detecting failure of a process monitoring system could be one of them. There may be a mapping between list of events or trigger states and fields in the MAC CE. The triggering an event may be equivalent to UE 320 transmitting a MAC CE with the field associated to failure of performance monitoring active.

In some examples, the event triggering at 315 may comprise triggering the event by transmitting a scheduling request in the uplink control information to indicate the event is triggered. In some example, the event triggering at 315 may comprise the UE transmitting with UCI a SR, which ID is associated to the event associated to failure of performance monitoring..

At 317, in response to 313 or 315, NW 322 may transmit a second configuration for performance monitoring to UE 320. The second configuration may comprise a third RS resource set, which may be different at least in part to the second RS resource set.

Some of the examples according to the method of FIG. 3 provide configurable and implementable conditions to allow/cause the UE to determine failure for performance monitoring of prediction based beam management. In some examples, network entity 322 can reconfigure UE 320 (e.g. with legacy beam management) in case the beam prediction procedure encounters problems.

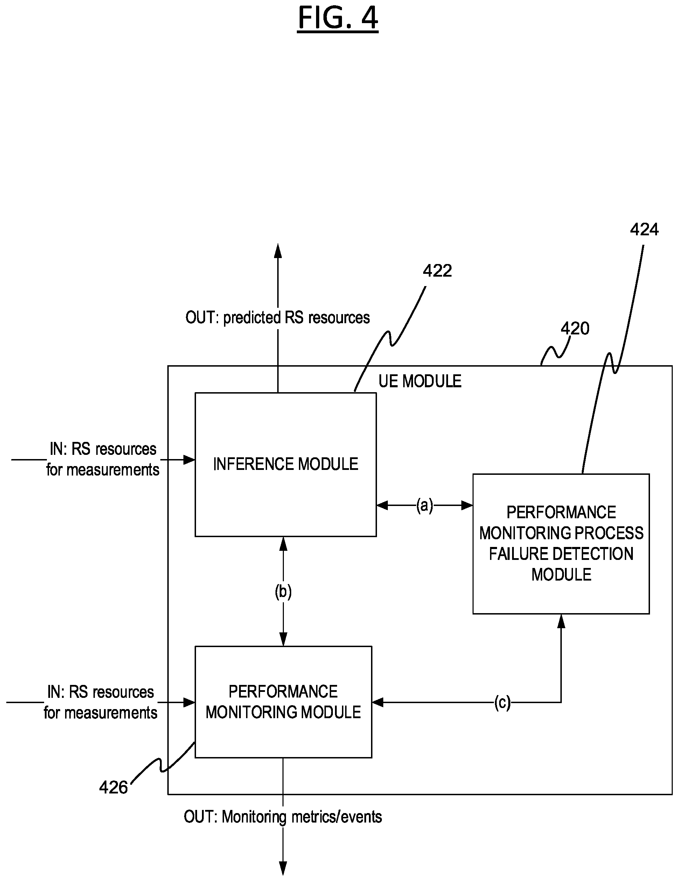

FIG. 4 shows an example UE 420 comprising inference module 422, performance monitoring failure detection module 424 and performance monitoring module 426. UE 420 may execute the inference module 422 which provides the AI/ML model prediction and a performance monitoring module 426, which evaluates the accuracy of the predictions of inference module 422. Performance monitoring process failure detection module 424 supervises the operation of the performance monitoring module 426 and, upon detection of a performance monitoring process failure, triggers a termination procedure for the performance monitoring module 426 and for the inference module 422.

In some examples, the inference module 422 may execute the Al/ML model inference on set B RS measurements to infer set A measurements. The input to the module is the set of RS resources that the UE measures and then uses as input to the AI/ML model. The output of the module is the set of predicted RS resources provided by the AI/ML model. The output can be transmitted to the NW (e.g., NW entity 322) with a CSI report. Note that the AI/ML model inference may be repeated for real time operations in order to provide the report configured by the NW. Moreover, UE 420 may use a dedicated Al/ML hardware accelerator (for Al/ML model inference), which can have limited resources and handle a limited number of processes at a time. A termination command may be received from the performance monitoring failure detection module to stop, suspend, or determine an interrupt of the Al/ML model inference.

In some examples, performance monitoring module 426 may be responsible for the execution of the performance monitoring process. The input of the module is the set of RS resources that UE 420 measures and uses as monitoring RS resources. The output of performance monitoring module 426 may comprise the set of measurements of RS resources or metrics/events to be reported to the NW (e.g. NW entity 322) as part of a performance monitoring report. Using connection (b) between performance monitoring module 426 and inference module 422, the performance monitoring process receives from the inference module the set of predicted RS resources to compare the predictions with the measurements and to determine the metrics/events to report to the NW. The processes may repeat these operations to continuously monitor the AI/ML model performance. However, there could be conditions that prevent this module from successfully performing the monitoring operations. Failure can be due to several conditions (also listed above):
- Failure to measure at least one RS resource in the set of monitoring RS resources;
- Failure to detect at least one RS resource in the set of monitoring RS resources;
- And/or failure to determine performance monitoring metrics and/or events related to at least one RS resource in the set of monitoring RS resources;
- The at least one RS resource in the set of monitoring RS resources is measured below a threshold level, i.e. the signal strength is not high enough (e.g. NW may configure a quality threshold such as a minimum RSRP threshold).

Whenever performance monitoring module 426 is unable to monitor, the module may communicate an error message to performance monitoring failure detection module 424.

The performance monitoring failure detection module 424 may be responsible for supervising the correct execution of the performance monitoring module by analyzing the error messages received with the connection (c) (between performance monitoring failure detection module 426 and performance monitoring module 424) and determining the failure conditions of the performance monitoring process.
- A threshold can be configured to set the maximum number of failures acceptable by the performance monitoring process.
- When the threshold is surpassed, the connections (a) (between inference module 422 and performance monitoring module 424) and (c) can be used to trigger the termination procedure for the performance monitoring module and for the inference module, respectively. The termination procedures may include the event-based or report-based indications to NW entity discussed above with respect to FIG. 3.

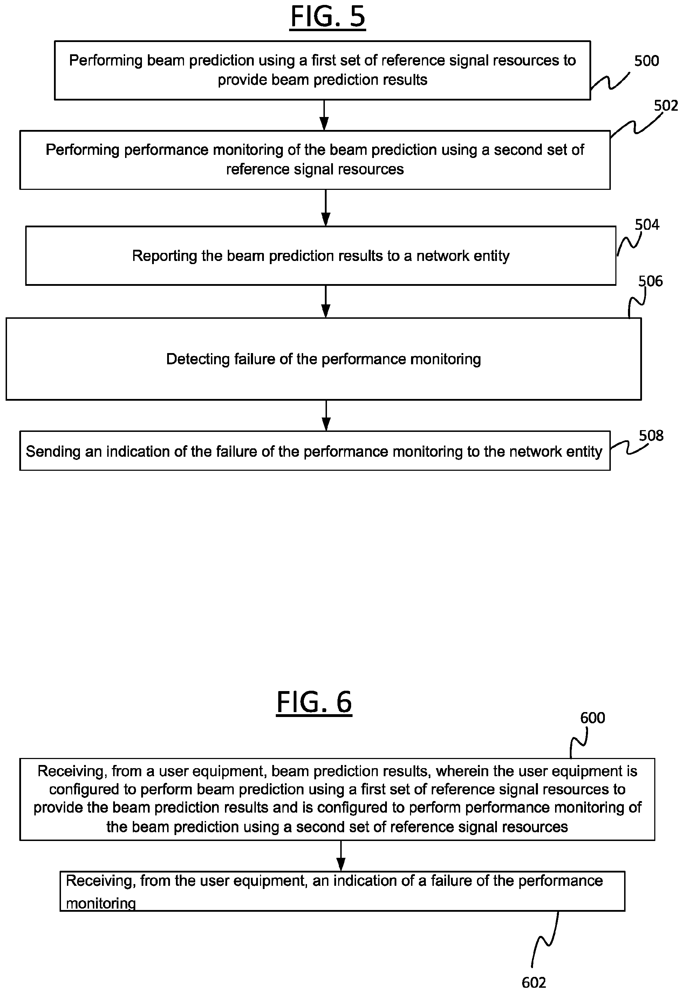

FIG. 5 shows an example method flow. The method may be performed by a UE such as UE 320 or UE 420, for example.

At 500, the method comprises performing beam prediction using a first set of reference signal resources to provide beam prediction results.

At 502, the method comprises performing performance monitoring of the beam prediction using a second set of reference signal resources

At 504, the method comprises reporting the beam prediction results to a network entity.

At 506, the method comprises detecting failure of the performance monitoring.

At 508, the method comprises sending an indication of the failure of the performance monitoring to the network entity/
FIG. 6 shows an example method flow. The method may be performed by a network entity such as network entity 322, for example.

At 600, the method comprises receiving from a user equipment, beam prediction results, wherein the user equipment is configured to perform beam prediction using a first set of reference signal resources to provide the beam prediction results and is configured to perform performance monitoring of the beam prediction using a second set of reference signal resources
At 602, the method comprises receiving, from the user equipment, an indication of a failure of the performance monitoring.

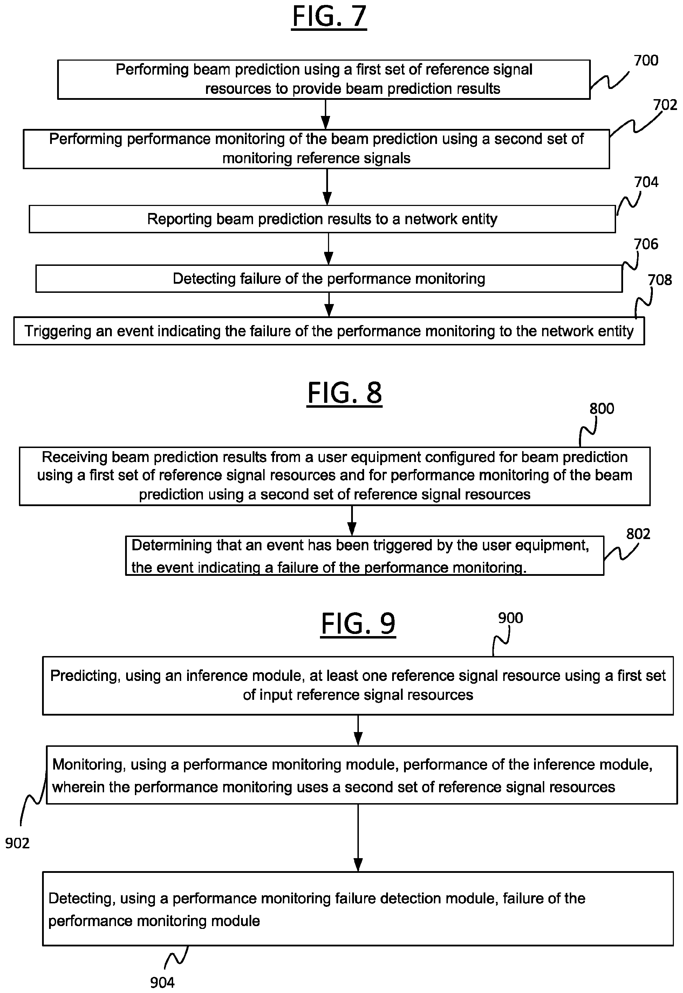

FIG. 7 shows an example method flow. The method may be performed by a UE such as UE 320 or UE 420, for example.

At 700, the method comprises performing beam prediction using a first set of reference signal resources to provide beam prediction results.

At 702, the method comprises performing performance monitoring of the beam prediction using a second set of monitoring reference signals.

At 704, the method comprises reporting beam prediction results to a network entity.

At 706, the method comprises detecting failure of the performance monitoring.

At 708, the method comprises triggering an event indicating the failure of the performance monitoring to the network entity.

FIG. 8 shows an example method flow. The method may be performed by a network entity such as network entity 322, for example.

At 800, the method comprises receiving beam prediction results from a user equipment configured for beam prediction using a first set of reference signal resources and for performance monitoring of the beam prediction using a second set of reference signal resources.

At 802, the method comprises determining that an event has been triggered by the user equipment, the event indicating a failure of the performance monitoring.

FIG. 9 shows an example method flow. The method may be performed by a UE such as UE 320 or UE 420, for example.

At 900, the method comprises predicting, using an inference module, at least one reference signal resource using a first set of input reference signal resources.

At 902, the method comprises monitoring, using a performance monitoring module, performance of the inference module, wherein the performance monitoring uses a second set of reference signal resources.

At 904, the method comprises detecting, using a performance monitoring failure detection module, failure of the performance monitoring module.

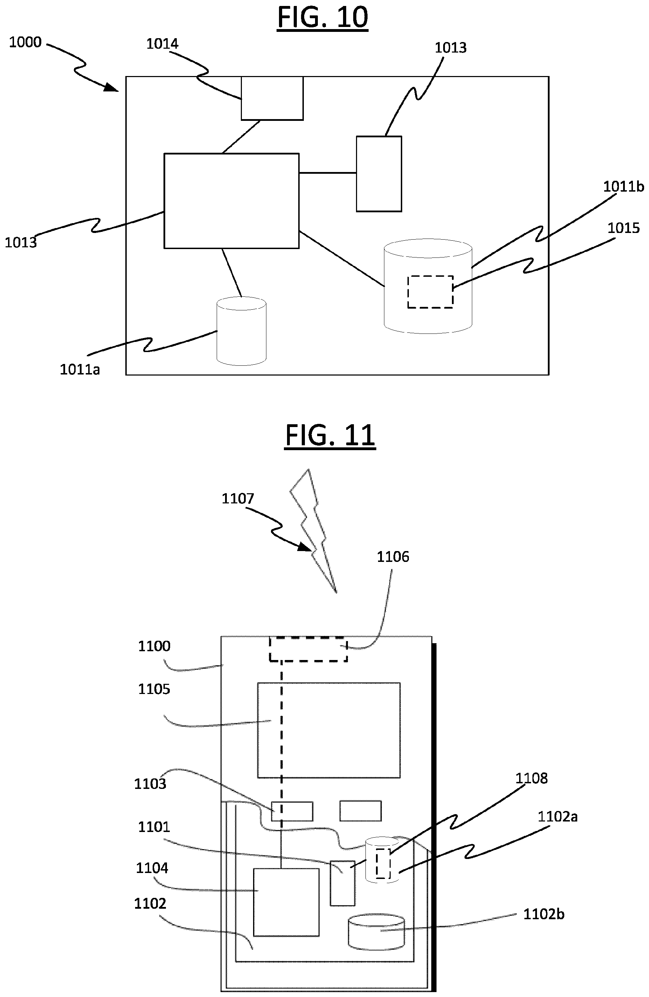

FIG. 10 illustrates an example of an apparatus 1000 implementing an element of a communication network. According to some examples, apparatus 1000 may implement a network entity, such as a base station (e.g., gNB). The apparatus 1000 may comprise at least one random access memory (RAM) 1011a, at least on read only memory (ROM) 1011b, at least one processor 1012, 1013 and a network interface 1014. The at least one processor 1012, 1013 may be coupled to the RAM 1011a and the ROM 1011b. The at least one processor 1012, 1013 may be configured to execute an appropriate software code 915 of the network entities described herein. Execution of the software code 1015 of the network entities described herein (or execution of instructions of the software code 1015) may for example cause the apparatus to perform the methods shown above. The software code 1015 may be stored in the ROM 1011b. The apparatus 1000 may be interconnected with another apparatus 1000 for controlling other network functions of a 5GC. In some embodiments, one or more network functions of the 5GC is deployed or hosted on an apparatus 1000. In alternative embodiments, the apparatus may include software code of additional network functions of the core network of the communication network. The apparatus 1000 may comprise a computing device (e.g., a server), a computing system, such as a distributed computing system, or a virtual machine provided by a cloud computing system. In some examples, the apparatus 1000 may comprise a cloud computing system (e.g., a cloud core network).

FIG. 11 illustrates an example of a communication device 1100, such as the UE 320 or 420. The communication device 1100 may be provided by any device capable of sending and receiving radio signals. Non-limiting examples of a communication device 1100 comprise a user equipment, such as but not limited to, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The communication device 1100 may comprise a transceiver for transmitting and/or receiving, for example, wireless signals carrying communications, for example radio signals. The communications may be one or more of voice, electronic mail (email), text messages, multimedia data, machine data and so on.

The communication device 1100 may receive wireless signals (e.g., radio signals) over an air or radio interface 1107 via appropriate apparatus for receiving and may transmit wireless signals via appropriate apparatus for transmitting radio signals. In FIG. 11 transceiver is designated schematically by block 1106. The transceiver 1106 may comprise, for example, a radio part and associated antenna arrangement. The antenna arrangement may be arranged internally or externally to the mobile device and may comprise one or more antenna elements. The antenna arrangement may be a multi-input multi output (MIMO) antenna.

The communication device 1100 may be provided with at least one processor 1101, at least one memory ROM 1102a, at least one RAM 1102b and other possible components 1103 for use in software and hardware aided execution of tasks it is configured to perform, including control of access to and communications with radio access networks and other communication devices. The at least one processor 1101 is coupled to the RAM 1102b and the ROM 1102a. The at least one processor 1101 may be configured to execute an appropriate software code 1108 (e.g., the at least one processor may execute instructions of the software code 1108). The execution of the software code 1108 may for example allow the communication device to perform one or more operations, including the operations described herein. The software code 1108 may be stored in the ROM 1102a.

The processor, the ROM, and the RAM, the transceiver and other circuitry of the communication device (e.g., a modem) can be provided on a circuit board, in chipsets, or in a system on chip. The circuit board, chipsets or system on chip is denoted by reference 1104. The communication device 1100 may optionally have a user interface such as key pad 1105, touch sensitive screen or pad, combinations thereof or the like. Optionally one or more of a display, a speaker and a microphone may be provided depending on the type of communication device.

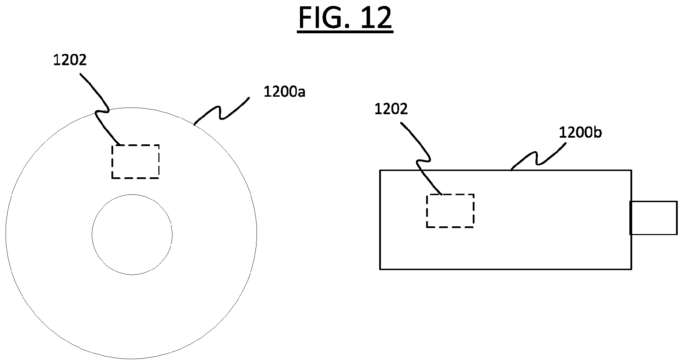

FIG. 12 shows a schematic representation of non-volatile memory media 1200a (e.g. computer disc (CD) or digital versatile disc (DVD)) and 1200b (e.g. universal serial bus (USB) memory stick) storing instructions and/or parameters 1202 which when executed by a processor allow the processor to perform one or more of the steps of any method flow described herein.

It is understood that references in the above to various network functions/entities may comprise apparatus that perform at least some of the functionality associated with those network functions. Further, an apparatus comprising a network function may comprise a virtual network function instance of that network function.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes various example embodiments, there are several variations and modifications which may be made to the various example embodiments without departing from the scope of this disclosure.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used herein, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of the term "means" herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Various example embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various example embodiments of the disclosure is set out by the independent claims. The example embodiments and features thereof, if any, described in this disclosure that do not fall under the scope of the independent claims are to be interpreted as examples useful for understanding various example embodiments of the disclosure.

The foregoing description has provided, by way of non-limiting and illustrative examples, a full and informative description of the various example embodiments of this disclosure. However, various modifications and adaptations may become apparent to those skilled in the relevant arts in view of the foregoing description, when read in conjunction with the accompanying drawings and the claims. However, all such and similar modifications of the teachings will still fall within the various example embodiments of the disclosure as set forth in the claims. By way of non-limiting and illustrative example, there is a further example embodiment comprising a combination of one or more example embodiments with any of the other example embodiments previously discussed.

## Claims

1. A user equipment comprising:
an inference module configured to predict at least one reference signal resource using a first set of input reference signal resources as an input of the inference module;
a performance monitoring module configured for performance monitoring of the inference module, wherein the performance monitoring uses a second set of reference signals as input to the performance monitoring module;
a performance monitoring failure detection module configured to detect failure of the performance monitoring module.

2. The user equipment according to claim 1, wherein the performance monitoring failure detection module is configured to send, in response to detecting the failure, an indication to stop or suspend the inference module from providing predictions of the at least one reference signal resource.

3. The user equipment according to claim 1 or claim 2, wherein the performance monitoring failure detection module is configured to send, in response to detecting the failure, an indication to the performance monitoring module to stop the performance monitoring.

4. The user equipment according to any preceding claim, wherein the performance monitoring module is configured to cause the user equipment to send an indication of the failure to a network entity in a network with which the user equipment is in communication, wherein the indication is preconfigured in the network.

5. The user equipment according to claim 4, wherein the indication is sent to the network entity in a report of the beam prediction or of the performance monitoring.

6. The user equipment according to claim 5, wherein the report comprises a report configured by at least one Radio Resource Control message from a network comprising the network entity.

7. The user equipment according to claim 5 or claim 6, wherein the indication comprises a value in the report that is preconfigured in the network to indicate the failure of the performance monitoring.

8. The user equipment according to any of claims 5 to 7, wherein the indication of the failure is associated with at least one reference signal resource of the second set of reference signal resources.

9. The user equipment according to any of claims 1 to 3, wherein the performance monitoring module is configured to cause the user equipment to trigger an event indicating the failure to the network.

10. The user equipment according to any preceding claim, wherein the inference module is configured to predict the at least one reference signal resource using a machine learning model, wherein information associated to the first set of reference signal resources are used as input of the machine learning model to predict the at least one reference signal.

11. The user equipment according to any preceding claim, wherein the performance monitoring module is configured to send an error message to the performance monitoring failure detection module upon detecting at least one of the following conditions:
failing to measure at least one reference signal of the second set of reference signal resources;
failing to detect at least one reference signal of the second set of reference signal resources;
failing to determine performance monitoring metrics and/or events related to at least one reference signal of the second set of reference signal resources;
measuring at least one reference signal of the second set of reference signal resources at a power level below a threshold.

12. The user equipment according to claim 11, wherein the performance monitoring failure detection module is configured to determine failure of the performance monitoring module after receiving a number of error messages larger than a threshold from the performance monitoring module.

13. The user equipment according to any preceding claim, wherein performance monitoring failure detection module is configured to cause, in response to detecting the failure of the performance monitoring by detecting a failure to detect at least one reference signal of the second set of reference signal resources, performing at least one of:
suspending or stopping the beam prediction;
transmitting null in a beam prediction report or a performance monitoring report for the at least one reference signal resource where the failure is detected, wherein the null provides the indication;
transmitting a dummy value for the at least one reference signal resource in the beam prediction report or the performance monitoring report, wherein the dummy value provides the indication; or
reporting measurement reference signal resources without reporting beam prediction results.

14. A method performed by a user equipment, the method comprising:
predicting, using an inference module, at least one reference signal resource using a first set of input reference signal resources;
monitoring, using a performance monitoring module, performance of the inference module, wherein the performance monitoring uses a second set of reference signal resources;
detecting, using a performance monitoring failure detection module, failure of the performance monitoring module.

15. A computer program comprising instructions for causing a user equipment to perform:
predicting, using an inference module, at least one reference signal resource using a first set of input reference signal resources;
monitoring, using a performance monitoring module, performance of the inference module, wherein the performance monitoring uses a second set of reference signal resource;
detecting, using a performance monitoring failure detection module, failure of the performance monitoring module.
